# EUROPEAN PATENT SPECIFICATION

(11) **EP 0 676 268 B1**
(45) Date of publication and mention of the grant of the patent: **10.12.1997**
(21) Application number: 95105112.7
(22) Date of filing: 05.04.1995
(51) Int. Cl.: B29C 45/14, A46D 3/04

(54) **A method of injection molding of brushes**
Verfahren zum Spritzgiessen von Bürsten
Procédé pour le moulage par injection de brosses

(30) Priority: 07.04.1994 GB 9406867
(43) Date of publication of application: 11.10.1995
(73) Proprietor: G.B. BOUCHERIE, N.V., B-8870 Izegem (BE)
(72) Inventor: Boucherie, Bart Gerard, 8870 Izegem (BE)
(74) Representative: Degwert, Hartmut, Dipl.-Phys.

(56) References cited:
- EP-A- 0 197 384
- EP-A- 0 326 634
- EP-A- 0 472 863
- WO-A-93/12690
- DE-A- 2 922 877
- DE-A- 3 832 520

## Description

The present invention relates to a method of injection molding of brushes, in particular of tooth brushes, using a mold with at least two relatively movable mold parts defining a mold cavity.

Conventional molds for molding brushes generally have a stationary mold part and a movable mold part with tuft insertion holes therein. Each mold part defines a portion of the mold cavity. To start the production of a brush, the movable mold part is withdrawn from the stationary mold part to open the mold. Tufts of bristles are then introduced into the tuft insertion holes, so that they have one end projecting into the cavity portion defined by the movable mold part. These bristle ends are then exposed to heat to form a knob of molten bristle material at the end of each tuft. Thereafter, the mold parts are moved against each other to close the mold. Plasticized molding material is then ejected into the cavity and around each knob of bristle material. The knobs of bristle material close the respective tuft insertion holes to prevent leakage of molding material from the cavity.

EP-A-326 634, on which the preamble of claim 1 is based, discloses the above described prior art technology.

Tufts of bristles incorporated in the brush body by embedding the tuft end in the molding material tend to spread open because there is a release of radial pressure around the implanted base of the tuft when the finished brushes are ejected from the mold. Thus, the bristles in each tuft are not strictly parallel and the brush may look somewhat like a used brush. This is, of course, undesirable.

The present invention provides a method of injection molding of brushes wherein the tufts of bristles are prevented from spreading open after ejection of the brush from the mold.

According to the invention, each tuft of bristles is pushed deeper into the molding material simultaneously preventing plasticized molding material from leaking out of the cavity and into the tuft insertion holes. By pushing the tufts deeper into the molding material, they have a greater length embedded in the brush body, thus minimizing any tendency for the tuft bristles to spread open. However, by pushing the tufts deeper into the molding material, the knobs formed on their ends within the cavity retract from the edges of the respective tuft insertion holes, so that plasticized molding material may penetrate between the tuft bristles and into the tuft insertion holes. Therefore, the method of the invention includes the additional step of preventing plasticized molding material from leaking out of the cavity and into the tuft insertion holes when the knobs of molten bristle material have retracted from the edges of the respective tuft insertion holes.

There are several ways to prevent leakage of plasticized molding material from the cavity and into the tuft insertion holes. A first way is an appropriate timing for the moment at which the tuft is pushed deeper into the molding material, so that deeper penetration is still possible, although the plasticized molding material has lost viscosity due to the cooling of the mold and therefore can not flow out of the mold. A second way is the use of tuft insertion tubes slidingly fitting into the tuft insertion holes and advanced therein to project out of the hole and into the mold cavity, the front edge of the insertion tube engaging the knob of molten bristle material to close any path for a potential leakage through the internal channel in the tube. Preferably, the tuft insertion tube is retracted from the cavity after the tuft of bristles has been advanced further into the molding material, at a moment where the molding material is still in a sufficiently plasticized state to flow into the annular space left by retraction of the tube.

Further features and advantages of the invention will stand out from the following description of several embodiments of the invention, with reference to the drawings, wherein:
- Fig. 1: is a schematic sectional view of a mold which can be used to perform the method of the invention;
- Fig. 2: is an enlarged partial view of the mold shown in Fig. 1 after retraction of the movable mold part and insertion of tufts of brush bristles;
- Fig. 3: illustrates a tuft of bristles embedded in the molding material;
- Fig. 4: shows a tuft of bristles tending to spread open;
- Fig. 5: shows a tuft of bristles pushed deeper into the molding material;
- Fig. 6: illustrates the use of a tuft insertion tube;
- Fig. 7: is a view similar to Fig. 6, but showing a knob of bristle material formed at the end of the tuft projecting into the mold cavity;
- Fig. 8: is a view similar to Fig. 7, but showing the knob on the end of the tuft embedded in molding material and pushed deeper into the material;
- Fig. 9: is a view similar to Fig. 8, but showing the tuft insertion tube retracted from the cavity;
- Fig. 10: illustrates an alternative embodiment with a pusher needle penetrating between the bristles and engaging the knob formed on the end of tuft projecting into the cavity; and
- Fig. 11: is a view similar to Fig. 10, but showing the tuft with the knob on its end pushed deeper into the molded material.

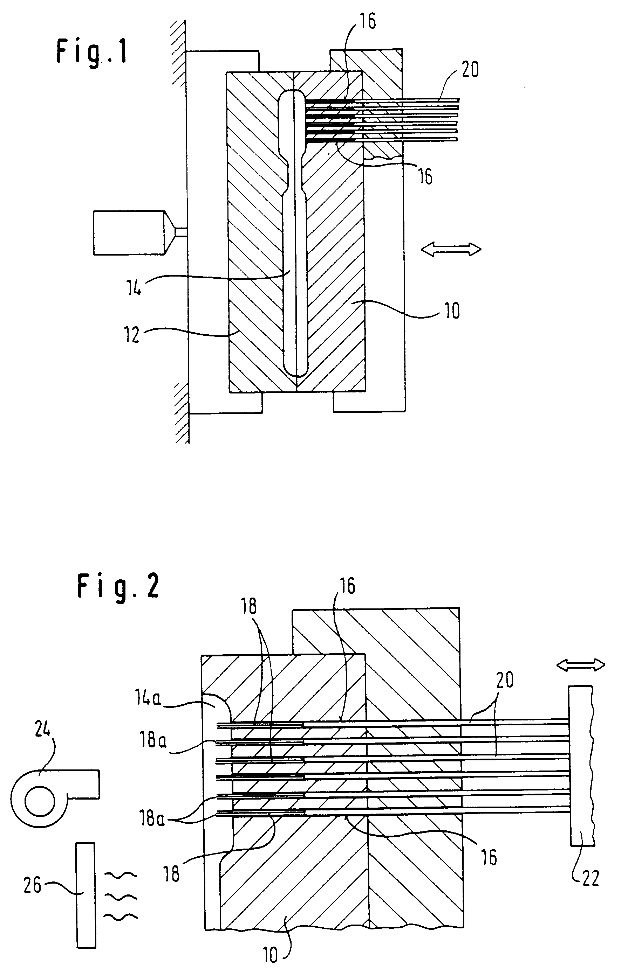

The mold shown in Fig. 1 is designed for the production of tooth brushes in a single operation, embedding the ends of tufts of bristles in the injection molded head portion of the brush body. The mold comprises a first, movable mold part 10 and a second, stationary mold part 12. A continuous cavity 14 is defined by mold parts 10, 12 when the mold is closed, as shown in Fig. 1. The mold cavity 14 corresponds in shape to the body of the tooth brushes to be produced. The movable mold part 10 is provided with a plurality of tuft insertion holes 16 extending through the thickness of the mold part.

Although a single cavity 14 is shown in Fig. 1, it should be understood that the mold can be provided with a plurality of similar mold cavities in closely adjacent relationship for simultaneous production of a plurality of tooth brushes.

To prepare the mold for the production of a new tooth brush, the mold is opened by retraction of movable mold part 10. As shown in Fig. 2, tufts of pre-finished bristles 18 are introduced through the tuft insertion holes 16 so that the forward ends thereof project into the mold cavity portion 14a defined in the mold part 10. Plunger members 20 engaged into the tuft insertion holes 16 can be used to advance the tufts of bristles 18 until their ends project into the cavity portion 14a over the desired length. These plunger members 20 are carried by a reciprocating pusher block 22, as schematically shown in Fig. 2. The ends 18a of the tufts 18 projecting into the cavity portion 14a are now exposed to heat from a hot air gun 24 or a heating plate 26, for example, to partially fuse the bristle ends and form individual knobs of molten bristle material at each tuft end. As a next step, the mold is closed, and injection of plasticized molding material is started. When the cavity 14 is filled with molding material, the knobs of molten bristle material are embedded in the molding material. After completion of the injection step, the mold can be opened to eject the finished tooth brush. Ejection of the finished tooth brush can be performed or at least assisted by the plunger members 20, pushing the tufts 18 out of the tuft insertion holes 16.

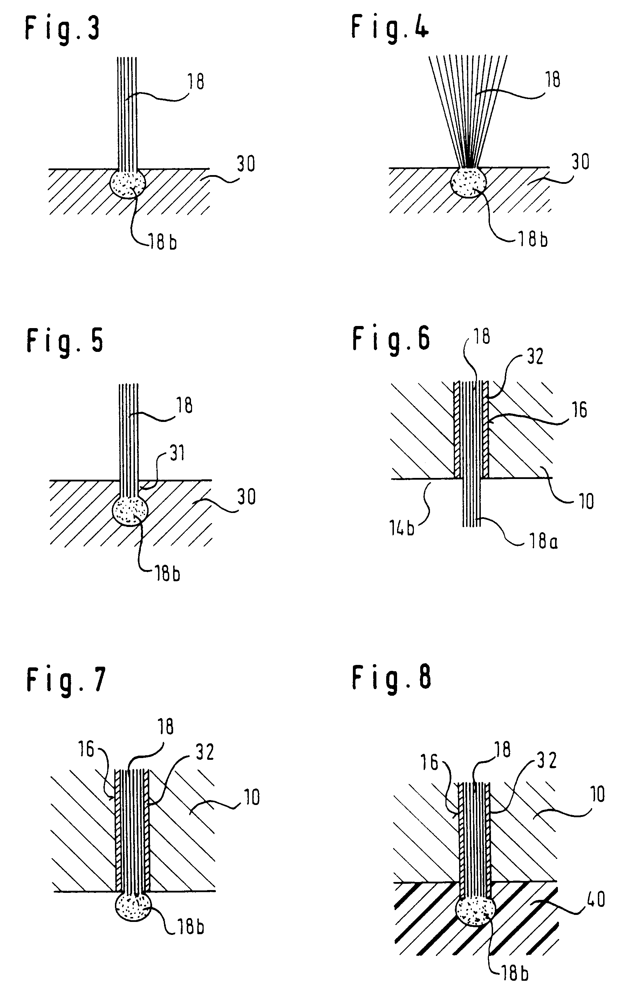

Fig. 3 shows the desired configuration of a tuft 18 of bristles having a knob 18b of molten bristle material embedded in the injection molded head portion 30 of the finished brush body. The bristles of the tuft 18 extend in a straight, parallel relationship.

In practice, however, the tufts incorporated into the brush body with the method disclosed so far tend to spread open, as shown in Fig. 4. It has been found that this undesirable effect can be avoided by pushing the tuft 18 with the knob 18b formed on its end deeper into the molding material of the head portion 30. As shown in Fig. 5, the knob 18b is buried in the molding material, forming a collar 31 of molding material extending around the embedded base part of the tuft and holding radially together the bristles of the tuft 18 under the action of pressure within the cavity during injection of the plasticized molding material.

The knobs 18b of molten bristle material not only hold the bristles together at their ends projecting into the cavity, they also prevent leakage from the cavity into the internal channels of the tuft insertion holes 16 as long as the portion of the knobs 18b surrounding the base of the tuft end engages the circular edge of the respective tuft insertion hole 16 opening into the mold cavity. This function of leakage prevention is assisted by the internal pressure in the cavity 14 during injection of the plasticized molding material since the knobs 18b of molten bristle material are pushed against the internal edges of the tuft insertion holes 16.

When the tufts 18 with the knobs 18b are pushed deeper into the molding material, as shown in Fig. 5, the knobs 18b are, of course, disengaged and retracted from the respective internal edges of the tuft insertion holes 16. Thus, the knobs 18b can not prevent leakage of plasticized molding material out of the cavity 14.

According to a first aspect of the inventive method, such leakage is prevented by appropriately timing the moment at which the tufts 18 are pushed deeper into the molding material, taking into account the viscosity of the plasticized molding material. Due to the cooling of the mold, the injected molding material will lose viscosity after completion of the injecting step. Thus, in order to prevent leakage of plasticized molding material from the cavity 14, the step of pushing the tufts 18 deeper into the molding material is performed after completion of the injecting step at the moment when the viscosity of the material still allows a deeper penetration of the knobs 18b, but is insufficient to allow leakage through the narrow interstices between the bristles and the walls of the tuft insertion holes 16.

According to another aspect of the inventive method, the leakage prevention function of the knobs 18b is maintained although they retract from the internal edges of the tuft insertion holes 16 when they are advanced deeper into the molding material. This embodiment is illustrated in Figs. 6 to 9.

As shown in Fig. 6, a tuft insertion tube 32 with a tuft of bristles 18 is used for introduction of the tuft 18 into each tuft insertion hole 16. The tube 32 is slidingly and sealingly received in the channel of the tuft insertion hole 16. The tube 32 is advanced through the mold part 10 until its forward end is flush with the internal cavity defining face 14b of mold part 10. The bristle ends 18a project into the cavity portion 14a (Fig. 2). The bristle ends 18a are now exposed to heat to form knobs 18b of molten bristle material, as shown in Fig. 7.

During injection of plasticized molding material 40, as shown in Fig. 8, the tubes 32 are advanced and pushed deeper into the molding material 40 with the front ends of the tubes 32 remaining engaged with the base portion of the knobs 18b. Thus, the knobs 18b continue to perform a leakage prevention function with respect to the internal channel of the tubes 32, thus preventing leakage of plasticized molding material from the cavity 14. This step of the method is illustrated in Fig. 8.

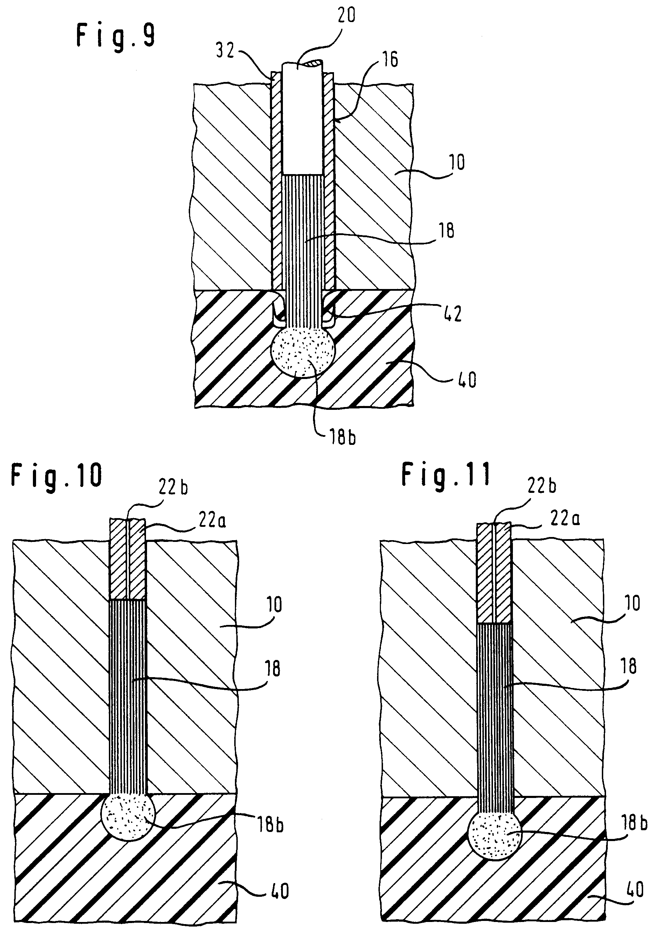

As shown in Fig. 9, the plunger members 20 remain engaged with the bristle ends opposite the knob 18b and are held in this position. While the molding material is still in a plasticized state, the tubes 32 are now retracted, leaving the knobs 18b embedded deeper in the molding material 40, and simultaneously leaving an annular space 42 around the base part of each tuft 18. Since the molding material 40 is still in a sufficiently plasticized state the annular space or gap 42 will be substantially filled under the action of internal pressure in the cavity to form the collar 31 (Fig. 5), extending around the base portion of the tuft 18. Again, retraction of the tubes 32 is timed so that the ejected molding material 40 has hardened to some extent to prevent it from leaking out of the cavity 14.

In an alternative embodiment shown in Figs. 10 and 11, the plunger members 20 of Fig. 2 are replaced by a combination of hollow pusher rods 22a and a pusher needle 22b, slidingly accommodated in a coaxial channel of the pusher rod 22a. The pusher needle 22b is pushed through the bristles of the tuft 18 until its forward end abuts the knob 18b of molten bristle material. Thereafter, with an appropriate timing with respect to the injecting step, as with the first embodiment of the method, the hollow pusher rods 22a and the pusher needles 22b are simultaneously advanced to push the tufts 18 and knobs 18b deeper into the injected molding material 40.

## Claims

1. A method of injection molding of brushes using a mold with at least two relatively movable mold parts defining a mold cavity, each of said mold parts defining a cavity portion and one of said mold parts having tuft insertion holes therein, and comprising the steps of
- moving said mold parts away from each other to open said mold,
- introducing tufts of bristles in said tuft insertion holes so that they have first ends projecting into a respective cavity portion,
- exposing said first bristle ends to heat and forming a knob of molten bristle material at a corresponding end of each tuft,
- moving said mold parts against each other to close said mold,
- injecting plasticized molding material into said cavity and around each knob of bristle material,
characterised in the further steps of
- pushing said tufts of bristles deeper into said molding material, and simultaneously
- preventing plasticized molding material from leaking out of said cavity and into said tuft insertion holes.

2. The method of claim 1, wherein the step of pushing said tufts of bristles deeper into said molding material is performed after termination of the injecting step and while the molding material is still in a plasticized state.

3. The method of claim 2, wherein a needle is axially introduced into each tuft until it engages the knob on the tuft end and advanced to push said tuft deeper into said molding material.

4. The method of claim 1, wherein tuft introduction tubes are used for introducing each tuft of bristles into a corresponding tuft insertion hole, each tuft being accomodated in an internal channel of a tuft introduction tube, wherein each tube is moved to and slidingly received in a corresponding tuft insertion hole.

5. The method of claim 4, wherein each of said tuft introduction tubes is advanced until its forward end is flush with the inner edge of the corresponding tuft insertion hole before molding material is injected and further advanced during injection of molding material, entraining the corresponding tuft by engagement of the knob formed on its end projecting into the cavity.

6. The method of claim 4, wherein each of said tuft introduction tubes is advanced until its forward end is flush with the inner edge of the corresponding tuft insertion hole before molding material is injected and further advanced after completion of the injecting step while the molding material is still in a plasticized state, entraining the corresponding tuft by engagement of the knob formed on its end projecting into the cavity.

7. The method of claim 5 or claim 6, wherein the tuft insertion tube is retracted from said cavity while said molding material is still in a plasticized state allowing said material to flow into an annular space surrounding the tuft and left after retraction of said tube and to substantially fill said annular space.

8. The method of claim 7, wherein a plunger member is introduced into said tuft insertion tube to engage and hold in position the corresponding tuft on its end opposite the knob during retraction of said tube.

## Patentansprüche

1. Verfahren zum Spritzgießen von Bürsten unter Verwendung einer Gußform mit Wenigstens zwei relativ zueinander bewegbaren Gußformteilen, die einen Gußhohlraum abgrenzen, wobei jedes der Gußformteile einen Hohlraumabschnitt abgrenzt und eines der Gußformteile in sich Büscheleinsetzlöcher aufweist, enthaltend die folgenden Schritte:
- die Gußformteile werden zum Öffnen der Gußform voneinander wegbewegt,
- in die Büscheleinsetzlöcher werden Borstenbüschel so eingebracht, daß sie in einen jeweiligen Hohlraumabschnitt hineinragende erste Enden aufweisen,
- die ersten Borstenenden werden Wärme ausgesetzt, und es wird an dem entsprechenden Ende jedes Büschels ein Knoten aus geschmolzenem Borstenmaterial gebildet,
- die Gußformteile werden zum Schließen der Gußform aufeinander zubewegt,
- in den Hohlraum und um jeden Knoten aus Borstenmaterial wird erweichtes Gußmaterial eingespritzt, gekennzeichnet durch die weiteren Schritte:
- die Borstenbüschel werden tiefer in das Gußmaterial eingedrückt, und gleichzeitig
- wird verhindert, daß erweichtes Gußmaterial aus dem Hohlraum heraus und in die Büscheleinsetzlöcher fließt.

2. Verfahren nach Anspruch 1, bei dem der Schritt, mit dem die Borstenbüschel tiefer in das Gußmaterial eingedrückt werden, nach Beendigung des Einspritzschrittes ausgeführt wird, so lange sich das Gußmaterial noch in einem erweichten Zustand befindet.

3. Verfahren nach Anspruch 2, bei dem in jedes Büschel axial eine Nadel eingeführt wird, bis sie an dem Knoten an dem Büschelende anliegt, und dann vorwärtsbewegt wird, um das Büschel tiefer in das Gußmaterial einzudrücken.

4. Verfahren nach Anspruch 1, bei dem Büscheleinsetzrohre dafür verwendet werden, jedes Borstenbüschel in ein zugehöriges Büscheleinsetzloch einzubringen, wobei jedes Büschel in einem inneren Kanal eines Büscheleinsetzrohres aufgenommen ist und wobei jedes Rohr zu einem entsprechenden Büscheleinsetzloch bewegt und dort verschiebbar aufgenommen wird.

5. Verfahren nach Anspruch 4, bei dem jedes der Büscheleinsetzrohre vor dem Einspritzen des Gußmaterials vorwärtsbewegt wird, bis sein vorderes Ende mit dem inneren Rand des entsprechenden Büscheleinsetzloches bündig ist, und beim Einspritzen des Gußmaterials weiter vorwärtsbewegt wird und das entsprechende Büschel durch Angreifen an dem an seinem in den Hohlraum hineinragenden Ende gebildeten Knoten mitnimmt.

6. Verfahren nach Anspruch 4, bei dem jedes der Büscheleinsetzrohre vor dem Einspritzen des Gußmaterials vorwärtsbewegt wird, bis sein vorderes Ende mit dem inneren Rand des entsprechenden Büscheleinsetzloches bündig ist, und nach Beendigung des Einspritzschrittes, so lange sich das Gußmaterial noch in einem erweichtem Zustand befindet, weiter vorwärtsbewegt wird und das entsprechende Büschel durch Angreifen an dem an seinem in den Hohlraum hineinragenden Ende gebildeten Knoten mitnimmt.

7. Verfahren nach Anspruch 5 oder 6, bei dem das Büscheleinsetzrohr aus dem Hohlraum zurückgezogen wird, während sich das Gußmaterial noch in einem erweichten Zustand befindet, was dem Material ermöglicht, in einen ringförmigen Raum zu fließen, der das Büschel umgibt und nach dem Zurückziehen des Rohres verblieben ist, und den ringförmigen Raum im wesentlichen zu füllen.

8. Verfahren nach Anspruch 7, bei dem in das Büscheleinsetzrohr ein Kolbenteil eingebracht wird, um an dem entsprechenden Büschel an seinem von dem Knoten abgewandten Ende anzugreifen und es während des Zurückziehens des Rohres in seiner Position zu halten.

## Revendications

1. Procédé de moulage de brosses par injection en utilisant un moule possédant au moins deux parties de moule mobiles l'une par rapport à l'autre et définissant une cavité de moule, chacune desdites parties de moule définissant une portion de cavité et des trous d'insertion de touffes étant pratiqués dans une desdites parties de moule, et comprenant les étapes consistant à:
- écarter lesdites parties de moule l'une de l'autre pour ouvrir ledit moule,
- introduire des touffes de poils de brosserie dans lesdits trous d'insertion de touffes de telle sorte que leurs premières extrémités font saillie dans une portion de cavité respective,
- exposer lesdites premières extrémités des poils de brosserie à la chaleur et former un bouton d'une matière de poils de brosserie en fusion à une extrémité correspondante de chaque touffe,
- ramener lesdites parties de moule l'une contre l'autre pour fermer ledit moule,
- injecter une matière de moulage plastifiée dans ladite cavité et autour de chaque bouton de matière de poils de brosserie,
caractérisé par les étapes supplémentaires consistant à:
- pousser lesdites touffes de poils de brosserie plus profondément dans ladite matière de moulage, et simultanément
- empêcher la matière de moulage plastifiée de s'écouler hors de ladite cavité et de pénétrer dans lesdits trous d'insertion de touffes.

2. Procédé selon la revendication 1, dans lequel l'étape consistant à pousser lesdites touffes de poils de brosserie plus profondément dans ladite matière de moulage est réalisée après l'achèvement de l'étape d'injection et tandis que la matière de moulage se trouve toujours à l'état plastifié.

3. Procédé selon la revendication 2, dans lequel on introduit une aiguille en direction axiale dans chaque touffe jusqu'à ce qu'elle vienne se mettre en contact avec le bouton sur l'extrémité de la touffe, et on la fait avancer pour pousser ladite touffe plus profondément dans ladite matière de moulage.

4. Procédé selon la revendication 1, dans lequel on utilise des tubes d'introduction de touffes pour introduire chaque touffe de poils de brosserie dans un trou d'insertion de touffe correspondant, chaque touffe étant logée dans un canal interne d'un tube d'introduction de touffes, dans lequel chaque tube se déplace en direction d'un trou d'insertion de touffe correspondant et vient s'y loger par glissement.

5. Procédé selon la revendication 4, dans lequel on fait avancer chacun desdits tubes d'introduction de touffes jusqu'à ce que son extrémité avant se trouve à fleur avec le bord interne du trou d'insertion de touffe correspondant avant l'injection de la matière de moulage et on les fait avancer plus loin au cours de l'injection de la matière de moulage en entraînant la touffe correspondante par contact avec le bouton formé sur son extrémité faisant saillie dans la cavité.

6. Procédé selon la revendication 4, dans lequel on fait avancer chacun desdits tubes d'introduction de touffes jusqu'à ce que leur extrémité avant se trouve à fleur avec le bord interne du trou d'insertion de touffe correspondant avant l'injection de la matière de moulage et on les fait avancer plus loin après achèvement de l'étape d'injection, tandis que la matière de moulage se trouve toujours à l'état plastifié, en entraînant la touffe correspondante par contact avec le bouton formé sur son extrémité faisant saillie dans la cavité.

7. Procédé selon la revendication 5 ou 6, dans lequel on retire le tube d'insertion de touffe de ladite cavité tandis que ladite matière de moulage se trouve toujours à l'état plastifié pour permettre à ladite matière de s'écouler dans un espace annulaire entourant la touffe qui reste après la rétraction dudit tube et de remplir essentiellement ledit espace annulaire.

8. Procédé selon la revendication 7, dans lequel on introduit un élément de piston-plongeur dans ledit tube d'insertion de touffe pour venir se mettre en contact avec la touffe correspondante et maintenir celle-ci en position à son extrémité opposée au bouton au cours de la rétraction dudit tube.
